# EUROPEAN PATENT SPECIFICATION

(11) **EP 1 702 779 B1**
(45) Date of publication and mention of the grant of the patent: **08.08.2012**
(21) Application number: 06380050.2
(22) Date of filing: 15.03.2006
(51) Int. Cl.: B60J 10/04, B60J 10/00

(54) **Automotive vehicle door with a window**
Kraftfahrzeug mit einer Fensterscheibe
Véhicule automobile avec une fenêtre

(30) Priority: 15.03.2005 ES 200500603 U
(43) Date of publication of application: 20.09.2006
(73) Proprietor: Seat, S.A., 08040 Barcelona (ES)
(72) Inventor: Veciana Sale, Rosa c/o Seat, S.A., 08760 Martorell Barcelona (ES); Diego Vives, José Maria c/o, Seat, S.A., 08760- Martorell Barcelona (ES); Pinedo Zarate, Jesus c/o Seat, S.A., 08760 Martorell Barcelona (ES)
(74) Representative: Carvajal y Urquijo, Isabel

(56) References cited:
- EP-A- 1 388 449
- WO-A-01/87658
- DE-A1- 10 039 655

## Description

The present invention refers to an automotive vehicle door with a window, of the type comprising a closed lower body and an upper frame that limits the window gap, which is closed by means of a glass that can be moved vertically, with the possibility of being retracted and concealed in the lower body.

In doors of the indicated type, the lower body is formed by an outer metallic wall, an intermediate metallic structure and an inner lining panel. There is a space delimited between the outer metallic wall and the intermediate metallic structure through which the glass for closing the window can move by means of guides and a known action mechanism. This space is restricted in its upper part by a window scraper, which is assembled on the outer metallic wall, and by a weather seal profile which is assembled on the intermediate metallic structure. The window scraper and weatherstripping seal are closed against the glass surface, preventing the entrance of water and air and they can also be used as sound insulators. The weather seal profile can also be used for the assembly of the inner lining panel by means of a weatherstripping seal.

Documents EP 1 388 449 A1 and WO 01/87658 A1 describe such a configuration.

The parallelism of the lower body door components is meant to be assured by the weatherstripping seal and the weather seal profile. Furthermore, these components can be used for the fastening of the inner door panel and to improve sound-proofing.

It is necessary to maintain parallelism between door body components to assure a good operation of the window glass. There are different, generally expensive, solutions for achieving this objective. For example, an inner, rigid liner panel, obtained by injection, and also thicker liner panels can be used.

These solutions entail a cost increase in the liner panel due to manufacturing processes as well as to the use of more expensive materials.

The objective of the present invention is to eliminate the drawbacks set forth by means of a door formed in such a way as to comply with the commented insulating and sealing features, in which the liner panel is formed by traditional materials that allow easy manufacturing and shaping, without increasing the overall assembly cost.

The objectives set forth are achieved, according to the present invention, by a special constitution of the weatherstripping seal and the weather seal profile.

The weatherstripping seal is configured as a ribbed profile and it is assembled by mounting on the intermediate section of the weather seal profile. The strip is provided with a longitudinal wing from the inner wall thereof. The outer wall of this profile is extended so that it partially embraces the weather seal profile, and they are provided, on their inner surface and from the free edge, with discontinuous longitudinal ribs that can be coupled to the window scraper for their mutual setting. This strip is also provided with transverse reinforcing partitions between the two walls and below the outer longitudinal wing.

In turn, the weather seal profile includes a central wire, based on aluminium for example, which assures its uniformity and helps to maintain its shape or position on the door. This weather seal profile is also provided with a longitudinal recess on the surface directed towards the window scraper, in which the longitudinal ribs of the outer wall of the weatherstripping seal are inserted, for their mutual setting.

The inner lining panel is welded to the weatherstripping seal, attaching it thereto. In turn, the weather seal profile offers enough rigidity to maintain its shape on the door due to the transverse reinforcing partitions. Furthermore, due to the extension of the innermost wall of the profile that shapes the weatherstripping seal, and the inclusion of inner ribs in said wall that are set in the longitudinal recess of the weather seal profile, a secure fastening of the weatherstripping seal on the weather seal profile is achieved. Lastly, this weather seal profile is clamped, in a known way, on the metallic structure of the door.

In this way, the inner lining of the door is perfectly secured at its upper part to the intermediate metallic structure of the door, an optimum assembly being definitely achieved that complies with the requirements for maintaining parallelism between the window scraper, which is assembled on the outer metallic wall of the door, and the inner lining panel of the body.

The features and advantages set forth can be better understood with the following description, made with reference to the enclosed drawings, in which a nonlimiting embodiment is shown.

In the drawings:
Figure 1 is an inner perspective view of a vehicle door with window, with a traditional outer configuration.
Figure 2 is a partial vertical sectional view of the door, taken along section line II-II of Figure 1, at a larger scale.
Figure 3 is a perspective view of the weather seal profile included in the door of the invention.
Figure 4 is cross-sectional view of the weather seal profile, taken along section line IV-IV of Figure 3.
Figure 5 is a lower perspective view of the weatherstripping seal.

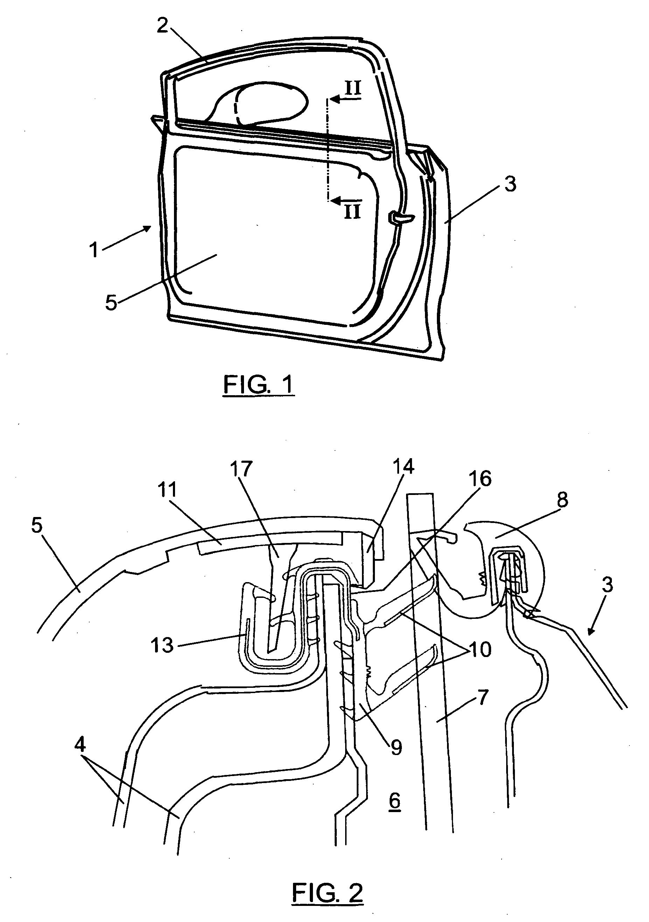

Figure 1 shows an inner perspective view of a vehicle door comprising a closed lower body, generally indicated with reference number 1, and an upper frame 2 delimiting the window gap than can be closed by means of a glass that can be moved vertically and can be concealed inside lower body 1.

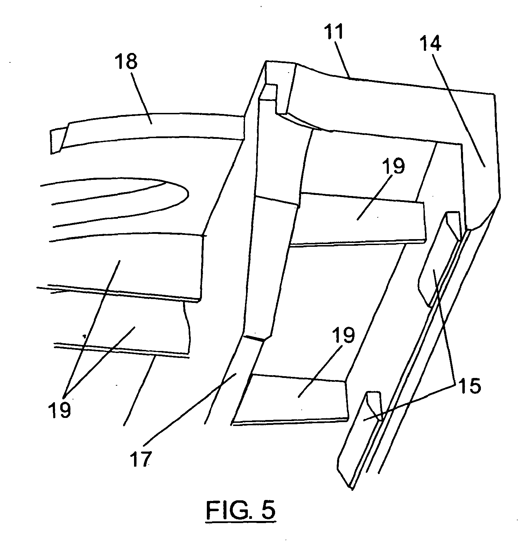

As can be observed in Figure 2, lower body 1 includes an outer metallic wall that is generally designated with reference number 3, an intermediate metallic structure that is generally designated with reference number 4, an inner lining panel 5 which will shape the inner surface of the door, as can be observed in Figure 5.

Delimited between the outer metallic wall 3 and the intermediate metallic structure 4, there is a space 6, through which glass 7 can move to close the window gap.

The space 6 is restricted or closed at its upper part by a window scraper 8, which is assembled on the upper edge of outer metallic wall 3, and by a weather seal profile 9, which is assembled on the intermediate metallic structure 4 and is provided with lips 10 that will, together with profile 8, rest on the glass 7 surfaces to ensure a closure that will prevent the entrance of dust and water and will also serve as a sound barrier.

Assembled on weather seal profile 9 there is a weatherstripping seal 11 to which the inner lining panel 5 is fixed by means of a suitable adhesive.

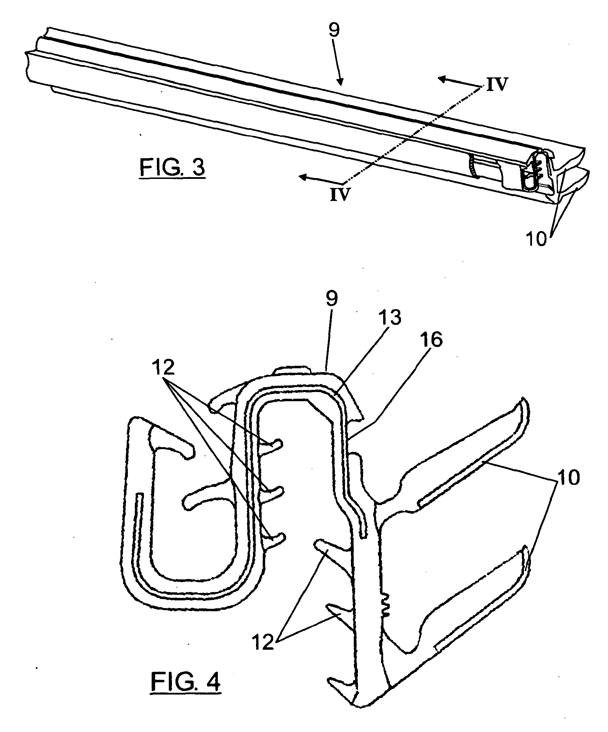

As can be observed in Figures 3 and 4, the weather seal profile 9 is externally provided with two lips 10, which will rest on the adjacent glass 7 surface, whereas it is internally provided on its walls with six opposed lips 12, by means of which this profile is secured to the upper edge of the intermediate metallic structure 4.

According to the invention, the weather seal profile includes a central wire 13, of aluminium for example, providing considerable reinforcement and helping to maintain the shape of the profile once it is assembled on the upper edge of the intermediate metallic structure 4 of the door.

As to weatherstripping seal 11, it is configured by way of a ribbed profile that is assembled by mounting on the weather seal profile 9. To achieve a good attachment, wall 14 is extended, which is provided internally, from the free edge, with discontinuous longitudinal ribs 15 intended to be coupled to a longitudinal recess 16, Figure 4, of the weather seal profile 9 in an opposing direction.

As can be seen in Figure 5, the weatherstripping seal 11 has a longitudinal wing 18 from wall 17; which is extended with the outer surface of the profile bottom to determine as a whole a surface for the support and union of the inner lining panel 5, as can be observed in Figure 2. Furthermore, weatherstripping seal 11 is provided with transverse reinforcing partitions 19 between walls 14 and 17 and below wing 18.

With the described constitution, strip 11 constitutes a robust and rigid element, provided with means for fastening to weather seal profile 9 and it further has a large surface area for the fixing of the inner lining panel 5 by means of adhesive. On the other hand, weather seal profile 9, is reinforced by means of the reinforcing wire 13 to ensure its position on the intermediate metallic structure 4.

With all this, the window scraper 8 profile and the inner lining panel 5 are maintained parallel and between which the passage opening for the glass 7 for closing the window is defined.

## Claims

1. An automotive vehicle door with a window, comprising a closed lower body (1) formed by an outer metallic wall (3), an intermediate metallic structure (4) and an inner lining panel (5); there is a space (6) delimited between such outer metallic wall and intermediate metallic structure through which the glass (7) for closing the window can move, which space is delimited at its upper part by a window scraper (8) assembled on the outer metallic wall and by a weather seal profile (9) that is assembled on the intermediate metallic structure and is used for the assembly of the inner lining panel by means of a weatherstripping seal (11), which weatherstripping seal is configured by way of a ribbed profile that is assembled by mounting on an intermediate section of the weather seal profile and is provided with a longitudinal wing (18) from the inner wall (17), **characterized in that** the outer wall (14) of said strip is provided, on its inner surface and from the free edge, with discontinuous longitudinal ribs (15) that can be coupled on the weather seal profile (9) for their mutual setting, whereas between the walls (14,17) and under the mentioned longitudinal wing (18) there are transverse reinforcing partitions (19); and **in that** the weather seal profile includes a central wire (13) and externally has, on the surface directed towards the window scraper, a longitudinal recess (16) in which the longitudinal ribs (15) of the outer wall of the weatherstripping seal are inserted.

## Patentansprüche

1. Kraftfahrzeugtür mit Fenster, umfassend einen geschlossenen unteren Körper (1), gebildet aus einer äußeren metallischen Wand (3), einer metallischen Zwischenstruktur (4) und einer inneren Verkleidungsplatte (5); wobei es einen Raum (6) gibt, der zwischen der genannten äußeren metallischen Wand und der genannten metallischen Zwischenstruktur abgegrenzt ist, durch welchen sich das Glas (7) zum Schließen des Fensters bewegen kann, wobei der Raum an seinem oberen Teil durch einen Fensterschaber (8), welcher an der äußeren metallischen Wand montiert ist, und durch ein wetterbeständiges Abdichtungsprofil (9), welches an der metallischen Zwischenstruktur montiert ist, abgegrenzt ist und für die Montage der inneren Verkleidungsplatte mittels einer wetterbeständigen Abdichtungsleiste (11) verwendet wird, wobei die wetterbeständige Abdichtungsleiste nach Art eines Rippenprofils ausgebildet ist, das durch die Montage an einem Zwischenabschnitt des wetterbeständigen Abdichtungsprofils zusammengebaut wird und mit einem longitudinalen Flügel (18) von der inneren Wand (17) her versehen ist, **dadurch gekennzeichnet, dass** die äußere Wand (14) der genannten Leiste, an ihrer inneren Oberfläche und von dem freien Rand her, mit unterbrochenen longitudinalen Rippen (15) versehen ist, welche an das wetterbeständige Abdichtungsprofil (9) für die gegenseitige Fassung angekoppelt werden kann, während zwischen den Wänden (14, 17) und unter dem genannten longitudinalen Flügel (18) sich transversale Verstärkungsabtrennungen (19) befinden; und dass das wetterbeständige Abdichtungsprofil einen zentralen Draht (13) hat und außen, an der Oberfläche die sich zum Fensterschaber hin richtet, eine longitudinale Ausnehmung (16) aufweist, in welche die longitudinale Rippen (15) der äußeren Wand der wetterbeständigen Abdichtungsleiste eingesetzt werden.

## Revendications

1. Portière de véhicule automobile avec une fenêtre, comprenant un corps inférieur fermé (1) formé par une paroi métallique extérieure (3), une structure métallique intermédiaire (4) et un panneau d'habillage interne (5) ; il y a un espace (6) délimité entre ladite paroi métallique extérieure et la structure métallique intermédiaire à travers lequel le vitrage (7) pour fermer la fenêtre peut se déplacer, lequel espace est délimité au niveau de sa partie supérieure par un lèche-vitre (8) assemblé sur la paroi métallique extérieure et par un profil de joint d'étanchéité (9) qui est assemblé sur la structure métallique intermédiaire et utilisé pour l'assemblage du panneau d'habillage interne au moyen d'un joint d'étanchéité (11), lequel joint d'étanchéité est configuré en guise d'un profil nervuré qui est assemblé par son montage sur une section intermédiaire du profil de joint d'étanchéité et est pourvu d'une aile longitudinale (18) à partir de la paroi interne (17), **caractérisée en ce que** la paroi extérieure (14) de ladite bande est pourvue, sur sa surface interne et à partir de l'extrémité libre, de nervures longitudinales discontinues (15) qui peuvent être accouplées sur le profil de joint d'étanchéité (9) pour leur scellage mutuel, tandis qu'entre les parois (14, 17) et sous ladite aile longitudinale (18) il y a des cloisons de renfort transversales (19), et **en ce que** le profil de joint d'étanchéité comporte un fil central (13) et extérieurement, sur la surface orientée vers le lèche-vitre, un évidemment longitudinal (16) dans lequel sont insérées les nervures longitudinales (15) de la paroi extérieure du joint d'étanchéité.
